# FASCICULE DE BREVET EUROPEEN

(11) **EP 1 038 620 B1**
(45) Date de publication et mention de la délivrance du brevet: **05.06.2002**
(21) Numéro de dépôt: 00490011.4
(22) Date de dépôt: 10.03.2000
(51) Int. Cl.: B23B 31/103, B23B 31/00

(54) **Outil d'usinage à tête amovible**
Bearbeitungswerkzeug mit abnehmbarem Kopf
Machining tool with detachable head

(30) Priorité: 23.03.1999 FR 9903760
(43) Date de publication de la demande: 27.09.2000
(73) Titulaire: SECO TOOLS AB, S-737 82 Fagersta (SE)
(72) Inventeur: Planche, Simon, 38110 La Tour du Pin (FR)
(74) Mandataire: Ecrepont, Robert

(56) Documents cités:
- EP-A- 0 291 477
- EP-A- 0 486 924
- US-A- 1 422 058

## Description

L'invention se rapporte à un outil d'usinage à tête amovible, tel que défini dans le préambule de la revendication 1, et connu du document US-A-1.422.058.

Les outils d'usinage se composent d'un support globalement longiligne dont une des deux extrémités dite extrémité active porte au moins une lame de coupe et l'autre extrémité dite d'ancrage est conformée pour s'accoupler à un porte outil tel un mandrin d'une machine outil.

Par outil d'usinage, on comprendra plutôt les alésoirs qui, notamment, permettent de réaliser des surfaces quasi finies que les outils de perçage ou forets.

Les forets sont des outils qui forment grossièrement une cavité cylindrique alors que l'alésoir permet d'avoir un alésage aux dimensions souhaitées avec une précision importante.

Pour ces alésoirs, existent de nombreux moyens d'accouplement et donc, si l'on dispose d'un parc de machines outil de provenances diverses, il faut multiplier les outils d'usinage.

Pour obvier ce problème, il est connu de réaliser l'outil d'usinage en deux parties comprenant une tête montée amovible sur un corps présentant, en partie arrière, des moyens d'accouplement avec un type de machine outil.

Pour assurer cette amovibilité, sur le corps, sont prévus des moyens de fixation de la tête.

On a d'abord utilisé un système à vis et, plus précisément, l'une des deux pièces présente un trou taraudé dans lequel s'insère une tige filetée portée par l'autre pièce.

Le positionnement angulaire de la tête par rapport à l'axe de rotation du corps est quasi impossible en raison des tolérances des filetages.

Au lieu de ce système de fixation, il est connu de fixer la tête à l'aide d'une vis traversant axialement la partie arrière du corps de l'outil et de verrouiller en rotation autour de l'axe de la partie arrière la tête à l'aide de deux vis disposées radialement dans l'une des deux pièces que sont la partie arrière et la tête dont les extrémités prennent appui sur deux méplats présentés par l'autre pièce.

Un tel montage, ainsi que le montage précédent ne permet pas de véhiculer un fluide de lubrification et/ou refroidissement au travers de l'outil.

Dans le domaine du perçage, on connaît un dispositif de fixation (US-1.422.058) qui consiste à former sur l'arrière d'un foret une gorge annulaire sur laquelle vient s'ancrer latéralement un crochet pivotant.

Un manchon vient coiffer localement l'ensemble pour former un verrouillage.

Une telle disposition n'est pas transposable sur un alésoir dont la partie arrière de l'outil doit être de dimension réduite par rapport au diamètre de la tête.

La position de l'ancrage du crochet provoque également un basculement de l'outil.

En outre, il est impossible d'acheminer un fluide de refroidissement au travers du corps de l'outil.

L'invention se propose notamment de remédier à cet inconvénient.

A cet effet l'invention a pour objet un outil d'usinage tel que défini dans la revendication 1.

D'autres modes de réalisation sont tels que définis dans les revendications 2 à 6.

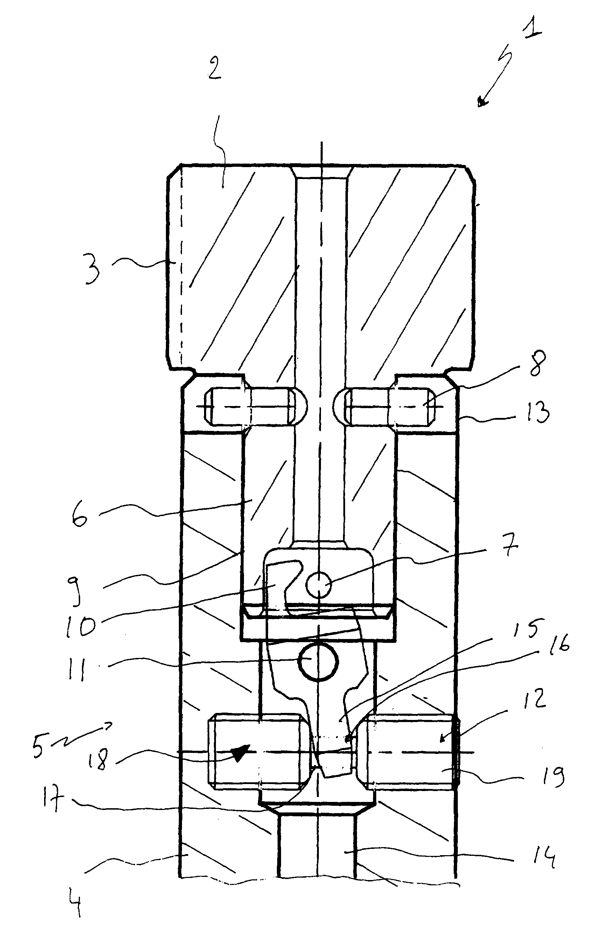

L'invention sera bien comprise à l'aide de la description ci-après faite à titre d'exemple non limitatif, en regard du dessin ci-annexé qui représente une coupe axiale de l'outil d'usinage.

En se reportant au dessin, on voit un outil 1 d'usinage comprenant :
- une tête 2 portant au moins une lame 3 de coupe,
- un corps 4 longiligne et
- des moyens 5 de fixation amovible de la tête sur le corps longiligne.

Après assemblage, la tête est verrouillée en translation et en rotation.

L'outil est un alésoir et il porte des lames de coupe qui, contrairement à un foret, sont indépendantes et ne sont pas conformées en hélice.

Selon une caractéristique de l'invention :
- la tête 2 comprend, en partie arrière, un cylindre 6 de révolution centré sur l'axe de rotation de l'outil, ce cylindre de révolution présentant, d'une part, en son extrémité arrière, une chape pourvue d'un axe 7 dit d'accrochage et, d'autre part, en son extrémité dite avant, au moins un ergot 8 en saillie par rapport à la surface cylindrique,
- le corps 4 longiligne présente :
   . débouchant dans sa face tournée vers la tête, un alésage 9 destiné à loger le cylindre de révolution précité et un crochet 10 monté sur un axe 11 de pivotement, lequel crochet est, par un moyen 12 de manoeuvre, mobile entre une position dite d'accrochage où ledit crochet est en prise avec l'axe dit d'accrochage de la tête et une position dite libérée permettant d'engager et désengager le cylindre de l'alésage et
   . dans la paroi cylindrique délimitant l'alésage 9, au moins une encoche 13 destinée à recevoir l'ergot 8 précité.

Au lieu d'une chape, il peut s'agir d'un logement traversé par un axe.

L'axe 7 est centré dans le plan médian de sorte que l'action du crochet se fait dans l'axe de l'outil.

Il en est de même pour l'axe de pivotement du crochet.

Un canal 14 centré sur l'axe de l'outil traverse le corps longiligne et la tête de l'outil.

Les tolérances d'usinage sont définies pour respecter le positionnement axial de la tête par rapport au corps.

Les sections des alésages et logements précités sont suffisantes pour permettre à un fluide introduit à l'extrémité arrière du corps longiligne dans le canal précité d'alimenter la tête d'usinage.

De préférence, le cylindre présente au moins deux ergots 8 qui, avantageusement, seront diamétralement opposés et donc la paroi de l'alésage présente deux encoches.

Ces ergots sont, par exemple, constitués par les extrémités d'une goupille traversant le cylindre en totalité ou partiellement.

Le calage en rotation se faisant au plus près des lames de coupe, on parvient à des tolérances d'usinage améliorées.

Le moyen 12 de manoeuvre comprend, portée par le crochet, une platine 15 dite de manoeuvre, présentant une échancrure 16, dans laquelle s'insère un tronçon 17 dit médian d'une vis 18 qui, à cet endroit, est de section réduite par rapport aux deux tronçons 19 situés de part et d'autre.

La vis 18 porte à l'une des extrémités une empreinte pour sa manoeuvre.

On obtient ainsi un outil d'usinage dont les moyens de fixation amovible garantissent un couple de rotation élevée et un positionnement axial strict obtenu notamment par l'utilisation d'un simple plan d'appui radial.

Le diamètre du cylindre 6 est largement inférieur au diamètre de la partie avant de la tête pour constituer une face d'appui sur la face de référence du corps de l'outil.

La traction se fait dans l'axe de l'outil.

L'outil est également plus simple à produire car il n'y a pas, comme dans les autres dispositifs, des surfaces coniques souvent nécessaires pour le positionnement axial d'une pièce par rapport à une autre.

La tête porte-lames est démontable sans avoir à retirer la queue de l'outil placée dans le mandrin.

La conception des moyens de fixation de la tête sur l'outil permet d'avoir une lame pour coupe frontale en partie antérieure de la tête.

## Revendications

1. Outil d'usinage à tête amovible comprenant :
- une tête (2) incluant en partie arrière, un cylindre (6) de révolution centré sur l'axe de rotation de l'outil,
- un corps (4) longiligne présentant, débouchant dans sa face tournée vers la tête, un alésage (9) destiné à loger le cylindre de révolution précité et un crochet (10) monté sur un axe (11) de pivotement, lequel crochet est, par un moyen (12) de manoeuvre, mobile et
- des moyens (5) de fixation amovible de la tête sur le corps longiligne,
**CARACTERISE en ce que** :
- la tête (2) porte au moins une lame (3) de coupe,
- le cylindre de révolution présente
. d'une part, en son extrémité arrière, une chape pourvue d'un axe (7) dit d'accrochage et,
. d'autre part, en son extrémité dite avant, au moins un ergot (8) en saillie par rapport à la surface cylindrique,
- le crochet (10) est mobile entre une position dite d'accrochage où ledit crochet est en prise avec l'axe dit d'accrochage de la tête et une position dite libérée permettant d'engager et désengager le cylindre de l'alésage; et
- le corps (4) longiligne présente dans la paroi cylindrique délimitant l'alésage (9), au moins une encoche (13) destinée à recevoir l'ergot (8) précité.

2. Outil d'usinage à tête amovible selon la revendication 1 **caractérisé en ce que**, au lieu d'une chape, il s'agit d'un logement traversé par un axe.

3. Outil d'usinage à tête amovible selon la revendication 1 **caractérisé en ce que** le cylindre présente au moins deux ergots (8) qui, avantageusement, seront diamétralement opposés et donc la paroi de l'alésage présente deux encoches.

4. Outil d'usinage à tête amovible selon la revendication 1 **caractérisé en ce qu'**un canal (14) centré sur l'axe de l'outil traverse le corps longiligne et la tête de l'outil.

5. Outil d'usinage à tête amovible selon la revendication 3 **caractérisé en ce que** les ergots sont constitués par les extrémités d'une goupille traversant le cylindre.

6. Outil d'usinage à tête amovible selon la revendication 1 **caractérisé en ce que** le moyen (12) de manoeuvre comprend, portée par le crochet, une platine (15) dite de manoeuvre, présentant une échancrure (16), dans laquelle s'insère un tronçon (17) dit médian d'une vis (18) qui, à cet endroit, est de section réduite par rapport aux deux tronçons (19) situés de part et d'autre.

## Patentansprüche

1. Bearbeitungswerkzeug mit abnehmbarem Kopf, welches folgendes aufweist:
- einen Kopf (2), der im hinteren Abschnitt einen auf der Drehachse des Werkzeugs zentrierten Rotationszylinder (6) umfasst,
- einen lang gestreckten Korpus (4), welcher in seiner dem Kopf zugewandten Fläche eine Bohrung (9) aufweist, die zur Aufnahme des Rotationszylinders bestimmt ist, sowie einen Haken (10), der auf einer Schwenkachse (11) angebracht ist, wobei der Haken über eine Betätigungseinrichtung bewegbar ist, und
- eine Einrichtung (5) zur lösbaren Befestigung des Kopfes auf dem lang gestreckten Korpus,
**dadurch GEKENNZEICHNET, dass**:
- der Kopf (2) mindestens eine Schneidklinge (3) trägt,
- der Rotationszylinder
- zum einen an seinem hinteren Ende eine mit einer so genannten Ankoppelachse (7) versehene Kappe aufweiset, und
- zum anderen an seinem so genannten vorderen Ende mindestens eine Nase (8) aufweist, die, bezogen auf die zylindrische Fläche vorsteht,
- der Haken (10) zwischen einer so genannten Ankoppelposition, in welcher sich der Haken im Eingriff mit der so genannten Ankoppelachse des Kopfes befindet, und einer Freigabeposition bewegbar ist, in welcher es möglich ist, den Bohrungszylinder einzusetzen und freizugeben, und
- der lang gestreckte Korpus in der zylinderförmigen Wandung, welche die Bohrung (9) begrenzt, mindestens einen Ausschnitt (13), der zur Aufnahme der Nase (8) bestimmt ist.

2. Bearbeitungswerkzeug mit abnehmbarem Kopf nach Anspruch 1, **dadurch gekennzeichnet, dass** anstelle einer Kappe eine Aufnahme vorgesehen ist, welche von einer Achse durchzogen ist.

3. Bearbeitungswerkzeug mit abnehmbarem Kopf nach Anspruch 1, **dadurch gekennzeichnet, dass** der Zylinder mindestens zwei Nasen (8) aufweist, welche vorteilhafterweise diametral einander gegenüber liegen und somit die Wandung der Bohrung zwei Ausschnitte aufweist.

4. Bearbeitungswerkzeug mit abnehmbarem Kopf nach Anspruch 1, **dadurch gekennzeichnet, dass** ein Kanal. (14), der auf die Achse des Werkzeugs zentriert ist, den lang gestreckten Korpus und den Kopf des Werkzeugs durchzieht.

5. Bearbeitungswerkzeug mit abnehmbarem Kopf nach Anspruch 3, **dadurch gekennzeichnet, dass** die Nasen aus den Enden eines Stifts bestehen, der den Zylinder durchzieht.

6. Bearbeitungswerkzeug mit abnehmbarem Kopf nach Anspruch 1, **dadurch gekennzeichnet, dass** die Betätigungseinrichtung (12) eine so genannte Betätigungsplatte (15) aufweiset, die vom Haken getragen wird und einen bogenförmigen Ausschnitt (16) aufweist, in welchen ein so genannter Mittelabschnitt (17) einer Schraube einsetzbar ist, welche an dieser Stelle einen Querschnitt aufweist, der gegenüber den beiden Abschnitten (19) zu beiden Seiten verringert ist.

## Claims

1. Machining tool with detachable head comprising:
- a head (2) including, at its rear part, a cylinder (6) of revolution centred on the axis of rotation of the tool,
- a longitudinally extending linear body (4) having, opening into its face directed towards the head, a bore (9) intended to accommodate the aforementioned cylinder of revolution and a hook (10) mounted on a pivot pin (11), which hook is movable by a control means (12) and
- means (5) for detachably fixing the head to the longitudinally extending linear body,
**CHARACTERISED in that**:
- the head (2) carries at least one cutting blade (3),
- the cylinder of revolution has, on the one hand, at its rear end, a clevis provided with a catching pin (7), and, on the other hand, at its front end, at least one lug (8) projecting from the cylindrical surface,
- the hook (10) is movable between a catching position in which the said hook is in engagement with the catching pin of the head and a released position permitting engagement and disengagement of the cylinder from the bore; and
- the longitudinally extending linear body (4) has, in the cylindrical wall delimiting the bore (9), at least one notch (13) intended to receive the aforementioned lug (8).

2. Machining tool with detachable head according to Claim 1, **characterised in that**, instead of a clevis, there is a housing through which the pin passes.

3. Machining tool with detachable head according to Claim 1, **characterised in that** the cylinder has at least two lugs (8) which, advantageously, are diametrically opposite and thus the wall of the bore has two notches.

4. Machining tool with detachable head according to Claim 1, **characterised in that** a channel (14) centred on the axis of the tool passes through the longitudinally extending linear body and the head of the tool.

5. Machining tool with detachable head according to Claim 3, **characterised in that** the lugs consist of the ends of a pin passing through the cylinder.

6. Machining tool with detachable head according to Claim 1, **characterised in that** the control means (12) comprises a control plate (15) carried by the hook and having a cutout (16), in which is inserted a median portion (17) of a screw (18) which, at this location, is of a smaller section than the two portions (19) situated on either side.
